# EUROPÄISCHE PATENTSCHRIFT

(11) **EP 2 513 430 B1**
(45) Veröffentlichungstag und Bekanntmachung des Hinweises auf die Patenterteilung: **05.12.2018**
(21) Anmeldenummer: 10790647.1
(22) Anmeldetag: 14.12.2010
(51) Int. Cl.: F01D 17/16, F01D 21/00, G01B 5/24

(54) **VORRICHTUNG ZUR BESTIMMUNG DER WINKELLAGE EINER SCHWENKBAREN VERDICHTERLEITSCHAUFEL**
Apparatus for determining the angular position of a pivotable compressor guide vane
Dispositif destiné à la détermination de la position angulaire d'une aube directrice de compresseur pivotante

(30) Priorität: 15.12.2009 EP 09015520
(43) Veröffentlichungstag der Anmeldung: 24.10.2012
(73) Patentinhaber: Siemens Aktiengesellschaft, 80333 München (DE)
(72) Erfinder: NIEDERBREMER, Fabian, Pasadena, TX 77507 (US)
(86) Internationale Anmeldenummer: PCT/EP2010/069579
(87) Internationale Veröffentlichungsnummer: WO 2011/073168

(56) Entgegenhaltungen:
- SU-A1- 815 466
- US-A- 4 597 187
- US-A- 4 718 172
- US-A1- 2009 021 247

## Beschreibung

Die Erfindung betrifft eine Vorrichtung zur Bestimmung der Winkellage einer in einem Verdichter angeordneten, um ihre Längsachse schwenkbaren Verdichterleitschaufel, der eine sich synchron mit ihr drehenden Messfläche zugeordnet ist.

Es ist bekannt, dass bei dem Zusammenbau von sich um ihre Längsachse verstellbaren Verdichterleitschaufeln und dem dazugehörigen Verstellantrieb diese einzeln mittels einer Vorrichtung zu einer am Leitschaufelträger angeordneten Referenznut ausgerichtet werden. Dies ist erforderlich, damit alle Schaufelblätter des Verdichterleitschaufelrings stets identische Staffelungswinkel aufweisen, um im Betrieb eine synchrone Anströmung der nachfolgenden Verdichterlaufschaufeln zu gewährleisten. Eine asynchrone Anströmung der Verdichterlaufschaufeln könnte zu einer Schwingungsanregung von einzelnen Schaufelblättern der Laufschaufeln führen. Dies könnte sich im ungünstigsten Falle schädigend auf die Laufschaufeln auswirken. Um diese ungewünschte und möglicherweise kritische Betriebssituation des Verdichters zu vermeiden, ist vor der Inbetriebnahme des Verdichters eine Überprüfung der Montagequalität durch eine abschließende Vermessung der Winkellage aller verstellbaren Leitschaufeln erforderlich.

Bisher wurde die Winkelstellung der Leitschaufeln mittels eines Universalwinkelmessers und einer Hilfsvorrichtung von außen am Gehäuse des Verdichters gemessen. Die Hilfsvorrichtung, die an der Referenznut am Leitschaufelträger angelegt wurde, diente als Anschlag für den einen Messschenkel des Winkelmessers. Die rückseitige Seitenfläche eines an der verdrehbaren Verdichterleitschaufel angeordneten Verstellhebels diente als Anschlagfläche für den zweiten Messschenkel des Winkelmessers, an dem dann die Winkellage der Leitschaufel abgelesen werden konnte. Bedingt durch die beengten Platzverhältnisse am Verdichter und je nach Position der zu überprüfenden Verdichterleitschaufel am Umfang konnte es zu Ablesefehlern und nicht exakt angelegten Messschenkeln kommen. Dies konnte insbesondere der Fall sein, wenn der Monteur über Kopf arbeiten muss. Durch die fehlerhafte Kontrolle konnte es möglich sein, dass korrekt eingestellte Leitschaufeln unnötigerweise in eine fehlerhafte Position verstellt oder Fehlstellungen von Verdichterleitschaufeln nicht erkannt wurden. Insgesamt konnte dies zu über den Umfang gesehen zum Teil ungleichmäßig eingestellten Staffelungswinkel der Schaufelblätter von drehbaren Leitschaufeln führen. Eine weitere Fehlerquelle, die zu einer geringfügig asymmetrischen Einstellung der Verdichterleitschaufeln führen kann, sind die Toleranzen durch die Verwendung der Hilfsvorrichtung.

Die Winkellage kann auch mit Hilfe einer transportablen, jedoch raumgreifenden Laser-Messvorrichtung erfasst werden, so wie es beispielsweise die EP 1 895 267 A1 vorschlägt. Zwar arbeitet die bekannte Messvorrichtung kontaktlos in Bezug auf die Messfläche, jedoch gelingt dies in der zumeist beengten Umgebung nur unter Verwendung eines Umlenkspiegels, welcher sich in der rauen Industrie-Umgebung derartiger Maschinen als nicht ausreichend robust und somit als zu beschädigungsanfällig darstellt. Folglich erfordert die Laser-Messvorrichtung eine vergleichsweise sanfte Handhabung, um die Verfügbarkeit der Messvorrichtung nicht zu beeinträchtigen.

Weiter ist aus der US 4, 597, 187 eine den konstruktiven Merkmalen des Oberbegriffs des Anspruchs 1 entsprechende Messeinrichtung zur Messung des Anstellwinkels von starren Verdichterschaufeln bekannt. Diese ist auf einem Tisch montiert, um einen vormontierten, jedoch noch nicht montierten Ring mit Schaufelblättern des Verdichters vermessen zu können. Die Messvorrichtung umfasst einen ersten Kontaktpunkt, der an die Vorderkante oder Hinterkante des zu untersuchenden Schaufelblatts angelegt wird. Eine drehbare Nockenscheibe mit einem Messarm ist dann so zu schwenken, dass zwei weitere, am Messarm angeordnete Kontaktpunkte am Schaufelblatt saugseitig oder druckseitig anliegen. Der Schwenkwinkel der Nockenscheibe wird dann mithilfe eines Sensors erfasst, welcher dann den Anstellwinkel des betreffenden Schaufelblatts angibt. Nachteilig ist hierbei, dass die Messung des Anstellwinkels unmittelbar am Schaufelblatt erfolgt. Dies erfordert den Zugang einer Person zum Schaufelblatt. Die bekannte Vorrichtung ist somit nicht geeignet zur Bestimmung der Winkellage einer in einem Verdichter angeordneten um ihre Längsachse schwenkbaren Verdichterleitschaufel von außen.

Ähnliche Vorrichtungen zur unmittelbaren Messung des Anstellwinkels von Verdichterschaufeln oder Dampfturbinenschaufeln sind aus der SU 815466 und US 4, 718, 172 bekannt. Diese weisen die identischen Nachteile wie die aus der US 4, 597, 187 bekannte Vorrichtung auf.

Aufgabe der vorliegenden Erfindung ist daher die Bereitstellung einer kompakten Vorrichtung zur außerhalb eines Gehäuses des Verdichters durchführbaren Bestimmung der Winkellage einer in einem Verdichter angeordneten, um ihre Längsachse schwenkbaren Verdichterleitschaufel, welche unter Aufrechterhaltung einer ausreichenden Messgenauigkeit eine einfache, robuste Handhabung der Vorrichtung und zuverlässige Messung der Winkellage ermöglicht.

Die Aufgabe wird durch eine Vorrichtung gelöst, welche gemäß den Merkmalen des Anspruchs 1 ausgebildet ist.

Die Erfindung geht von der Erkenntnis aus, dass Ablesefehler auch dann vermieden werden können, wenn die Messung der Winkelstellung bzw. der Winkellage der Verdichterleitschaufel lediglich halbautomatisch erfolgt. Zur halbautomatischen Erfassung weist die Vorrichtung eine an einer Halteeinrichtung angeordnete Messeinheit auf, die eine Winkelmesseineinrichtung mit einer um eine Drehachse drehbaren Drehplatte umfasst, an welcher Drehplatte ein senkrecht abstehender, sich parallel zur Drehachse erstreckender Messarm zur flächigen Anlage seines freien Endes an der Messfläche vorgesehen ist.

Die Erfindung basiert auf einer berührenden Erfassung der Winkellage. Dies wird insbesondere dadurch ermöglicht, dass kommerziell verfügbare Winkelmesseinrichtungen vorhanden sind, die nicht mit Hilfe zweier gegeneinander beweglicher Messschenkel einen Winkel erfassen, sondern über eine Schwenk- bzw. Drehbewegung einer Drehplatte um eine Drehachse. Die Drehachse der Winkelmesseinrichtung muss zur exakten Bestimmung der Winkellage parallel zur Drehachse der schwenkbaren Verdichterleitschaufel ausgerichtet sein. Dadurch ist es möglich, dass bei Verlagerung der Messfläche durch die Schwenkung der Verdichterleitschaufel für jede mögliche Winkellage der Verdichterleitschaufel der Messarm stets flächig mit seinem freien ebenen Ende an der ebenfalls ebenen Messfläche anliegen kann. Hierzu ist die Drehplatte um den gleichen Betrag wie die Messfläche zu schwenken, was die Winkelmesseinrichtung dann erfasst und als Winkel zwischen zwei Lagen anzeigt.

Folglich wird die von einer Verdichterleitschaufel eingenommene Position auf die Vorrichtung zur Bestimmung der Winkellage mit Hilfe ihres Messarms übertragen.

Der Bediener der Messvorrichtung hat lediglich dafür Sorge zu tragen, dass der Messarm - ohne Verkanten - flächig an der Messfläche anliegt. Die Erfassung der Winkellage erfolgt dann selbsttätig durch die Winkelmesseinrichtung, so dass insgesamt von einer halbautomatischen Erfassung der Winkellage der schwenkbaren Verdichterleitschaufel gesprochen werden kann. Mehrere Messarme sind daher auch nicht erforderlich.

Aufgrund der halbautomatisierten Erfassung der Lage der Messfläche mit Hilfe der Vorrichtung wird vermieden, dass mechanische Ungenauigkeiten wie beispielsweise nicht exakt angelegte Messschenkel an der Hilfsvorrichtung bzw. an dem Verstellhebel das Messergebnis beeinflussen können.

Bedingt durch die halbautomatische Erfassung entfällt zudem das Kalibrieren. Lediglich eine Justierung der Vorrichtung ist weiterhin erforderlich, wobei dies anhand einer simplen Justiervorrichtung ohne Weiteres möglich ist.

Der Erfindung liegt somit die Erkenntnis zu Grunde, dass eine besonders robuste Vorrichtung erhalten werden kann, wenn auf die Lasersensoren und den Umlenkspiegel der aus dem Stand der Technik bekannten, in ihrer Handhabung anfälligen Vorrichtung verzichtet werden kann.

Ein weiterer Vorteil liegt in der direkten Messung der Winkellage der Messfläche und somit in der indirekten Messung des Anstellwinkels. De Facto wird nicht der Anstellwinkel eines aerodynamisch gewölbten Schaufelblatts erfasst. Vielmehr wird mit der Erfindung eine Messvorrichtung angegeben, die von außen die Winkellage einer verstellbaren Verdichterleitschaufel erfassen kann aufgrund einer dort angeordneten Messfläche, die sich synchron mit der ihr zugeordneten Verdichterleitschaufel schenkt. Dies hat zudem den Vorteil, dass die Messvorrichtung unabhängig von der aerodynamischen Kontur des Profils des Schaufelblatts anwendbar ist, wodurch die Winkellagen von verstellbaren Verdichterleitschaufeln unterschiedlicher Schaufelkränze mit ein und derselben Messvorrichtung erfassbar sind.

Vorteilhafte Ausgestaltungen sind in den Unteransprüchen angegeben.

Vorzugsweise ist die Messeinheit über einen translatorisch verschiebbaren Schlitten an der Halteeinrichtung angeordnet. Dies erleichtert den Messvorgang insgesamt, da dadurch zuerst die gesamte Messvorrichtung von außen an das Gehäuse des Verdichters angeordnet werden kann. Erst nach fehlerfreier Ausrichtung der Vorrichtung am Gehäuse kann dann durch Verschieben des Schlittens samt Messeinrichtung deren Messarm so an der Messfläche platziert werden, dass dessen freies, ebenes Ende flächig an der ebenen Messfläche anliegt. Es wird somit vermieden, dass das Festlegen der Vorrichtung am Gehäuse und das Anlegen des Messarms an der Messfläche gleichzeitig durch den Bediener erfolgen muss. Dies führt zu einer höheren Messgenauigkeit und zur Vermeidung von Messfehlern.

Zweckmäßiger Weise ist der Schlitten dabei senkrecht zur Drehachse der Drehplatte verschiebbar.

Eine besonders kompakte Vorrichtung kann angegeben werden, wenn die Halteeinrichtung im Wesentlichen U-förmig mit zwei seitlich angeordneten Flanken und einem die beiden Flanken verbindenden Steg ausgebildet ist, wobei der Schlitten senkrecht zu den Flanken parallel zum Steg verschiebbar ist. Die Flanken sind jeweils als rahmenförmige Stützen ausgebildet, deren freies Ende jeweils an den Verdichter bzw. von außen an das Gehäuse des Verdichters anlegbar ist. Somit befindet sich die Messeinrichtung hauptsächlich in der gedachten Verlängerung der Drehachse der verstellbaren Leitschaufel, so dass seitlich der Messfläche nur ein sehr geringer Platzbedarf zur Messung der Winkellage erforderlich ist.

Eine besonders einfache Handhabbarkeit und Bedienung der Vorrichtung lässt sich erreichen, wenn an den beiden Stegenden oder Flanken Griffe zum gleichzeitigen Festhalten der Vorrichtung mit zwei Händen vorgesehen sind, derart, dass der Schlitten mit zumindest einem Daumen verschiebbar ist. Vorzugsweise wird die Vorrichtung mit zwei Händen vom Bediener gehalten, wodurch dieser durch gleichzeitiges Bewegen seiner Daumen besonders einfach und ohne Verkanten den Schlitten entlang von Schienen verschieben kann. Je nach Zugänglichkeit ist notfalls auch eine einhändige Handhabung der Vorrichtung und Bedienung des Schlittens möglich.

Zur besonders einfachen und temporären Befestigung der Vorrichtung an einem Verdichter weist die Halteineinrichtung mehrere Magnete, insbesondere mehrere Dauermagnete auf. Mittels Dauermagnete kann die Halteeinrichtung besonders einfach vorübergehend am Verdichter befestigt und nach durchgeführter Messung wiederum entfernt werden. Ebenso erleichtert die Verwendung von Magneten die Handhabung der Vorrichtung beim Anlegen an den Verdichter mit lediglich einer Hand. Außerdem wird bei erforderlichen Über-Kopf-Arbeiten die Vorrichtung sicher unterhalb des Verdichters temporär festgelegt.

Um die Vorrichtung gegenüber dem Verdichter exakt zu positionieren und eine fehlerhafte Erfassung der Winkellage aufgrund einer unsachgemäß ausgerichteten Vorrichtung auszuschließen, ist diese mittels zweier Vorsprünge gegenüber einem am Verdichter angeordneten Referenzelement in einer vorgegebenen Messposition ausgerichtet festlegbar. Das Referenzelement ist dabei vorzugsweise als Umfangsnut ausgebildet, in der an der Halteeinrichtung vorgesehene Vorsprünge als Federelemente einer Nut- und Federverbindung d.h. formschlüssig, einsetzbar sind. Ein gegenüber der vorgegebenen Messposition verdreht sitzende Vorrichtung kann somit vermieden werden. Vorzugsweise ist in jedem Vorsprung eine federgelagerte Kugel vorgesehen, die geringfügig aus einer Seitenwand des Vorsprungs herausragen kann. Jede Kugel stützt sich an einer der beiden Seitenwände der Umfangsnut ab und drückt somit die ihr gegenüberliegende Fläche des Vorsprungs an die andere der beiden Seitenwände der Umfangsnut, wodurch eine exakte Lage der Vorrichtung erzielt wird. Die federgelagerte Kugel ist auch unter dem Begriff "Druckstück" bekannt.

Um eine besonders einfache Bestimmung der Winkellage einer verdrehbaren Verdichterleitschaufel zu ermöglichen, ist eine Referenzlage der Messfläche diejenige der von ihr einnehmbaren Lagen, bei der die Messfläche senkrecht zur Maschinenachse steht.

Die von der Winkelmessvorrichtung bestimmbare Winkellage wird vorzugsweise von einer Anzeige digital angezeigt. Dabei zeigt die Anzeige eine Winkellage von 0° an, wenn sich die Messfläche in ihrer Referenzlage befindet und die Vorrichtung korrekt gegenüber dem Referenzelement ausgerichtet ist.

Um die ermittelten Winkellagen für statistische Untersuchungen und Dokumentationszwecke weiterverwendbar bereitzuhalten, können diese beispielsweise in einem Zwischenspeicher der Vorrichtung oder in einer Datenbank abgespeichert werden. Die abgespeicherten Winkellagen können zudem über handelsübliche Schnittstellen aus der Vorrichtung ausgelesen werden.

Folglich kann durch die Verwendung der mobilen Vorrichtung Messtoleranzen an Führungen und fehlerhafte Handhabungen von Messschenkeln vermieden werden. Außerdem gewährleisten die Druckstücke eine genaue, reproduzierbare Ausrichtung der Vorrichtung am Gehäuse des Verdichters bzw. am Leitschaufelträger, wobei die Magnete die Handhabung erleichtern und die Bedienung der Vorrichtung nur durch einen Monteur ermöglichen. Ablesefehler können durch vergleichsweise große, digitale Darstellungen des Messergebnisses ausgeschlossen werden.

Die Erfindung wird anhand von vier Figuren erläutert.

Es zeigen:
- FIG 1: eine Gasturbine in einem Längsteilschnitt,
- FIG 2: die Draufsicht auf einen Verdichterleitschaufelträger mit einem Verstellhebel,
- FIG 3: die Vorrichtung zum Bestimmen der Winkellage einer um ihre Längsachse schwenkbaren Verdichterleitschaufel in einer perspektivischen Ansicht und
- FIG 4: die Vorrichtung zur Bestimmung der Winkellage am Verdichter der Gasturbine in einer Messposition.

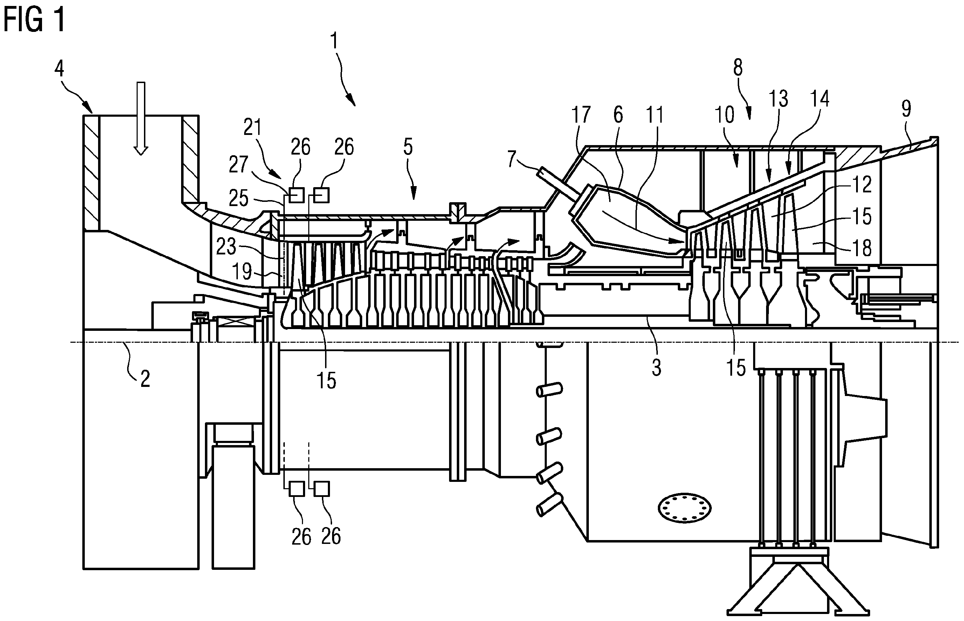

FIG 1 zeigt eine als Gasturbine 1 ausgebildete Turbomaschine in einem Längsteilschnitt. Sie weist im Inneren einen um eine Maschinenachse 2 drehgelagerten Rotor 3 auf, der auch als Turbinenläufer bezeichnet wird. Entlang des Rotors 3 folgen aufeinander ein Ansauggehäuse 4, ein Verdichter 5, eine torusartige Ringbrennkammer 6 mit mehreren rotationssymmetrisch zueinander angeordneten Brennern 7, eine Turbineneinheit 8 und ein Abgasgehäuse 9. Die Ringbrennkammer 6 bildet einen Verbrennungsraum 17, der mit einem ringförmigen Heißgaskanal 18 kommuniziert. Dort bilden vier hintereinander geschaltete Turbinenstufen 10 die Turbineneinheit 8. Jede Turbinenstufe 10 ist aus zwei Schaufelringen gebildet. In Strömungsrichtung eines in der Ringbrennkammer 6 erzeugten Heißgases 11 gesehen, folgt im Heißgaskanal 18 jeweils einer Leitschaufelreihe 13 eine aus Laufschaufeln 15 gebildete Reihe 14. Die Leitschaufeln 12 sind am Stator befestigt, wohingegen die Laufschaufeln 15 einer Reihe 14 mittels einer Turbinenscheibe am Rotor 3 angebracht sind. An dem Rotor 3 ist ein Generator oder eine Arbeitsmaschine (nicht dargestellt) angekoppelt.

Am ansauggehäuseseitigen Eingang des Verdichters 5 sind verstellbare Verdichterleitschaufeln 19 vorgesehen. Die Verdichterleitschaufeln 19 sind strahlenförmig im ringförmigen Strömungskanal des Verdichters 5 angeordnet und können um ihre jeweilige Längsachse 23 von einer Antriebsvorrichtung 21 gedreht werden, um beispielsweise den die Gasturbine 1 durchströmenden Massenstrom einzustellen. Je nach Anstellwinkel, der auch Staffelungswinkel genannt wird, kann ein besonders großer oder ein kleiner Massenstrom die Gasturbine 1 bedarfsgerecht durchströmen. Um Strömungsverluste in der angesaugten Umgebungsluft zu reduzieren und um eine Schwingungsanregung von sich unmittelbar stromab der Verdichterleitschaufeln 19 drehenden Laufschaufeln 15 zu verhindern, welche bei einer über den Umfang gesehen ungleichmäßigen Anströmung der Laufschaufeln 15 erfolgt, werden alle Verdichterleitschaufeln 19 synchron unter stetiger Beibehaltung gleicher Anstellwinkel mittels der Antriebsvorrichtung 21 verstellt.

Die Antriebsvorrichtung 21 ist außerhalb des Strömungskanals vorgesehen und umfasst neben Verstellhebeln 27, die jeweils einer Verdichterleitschaufel 19 zugeordnet sind, einen alle Verstellhebel 27 gleichzeitig betätigenden Stellring 26, der den Verdichter 5 ringartig umgreift.

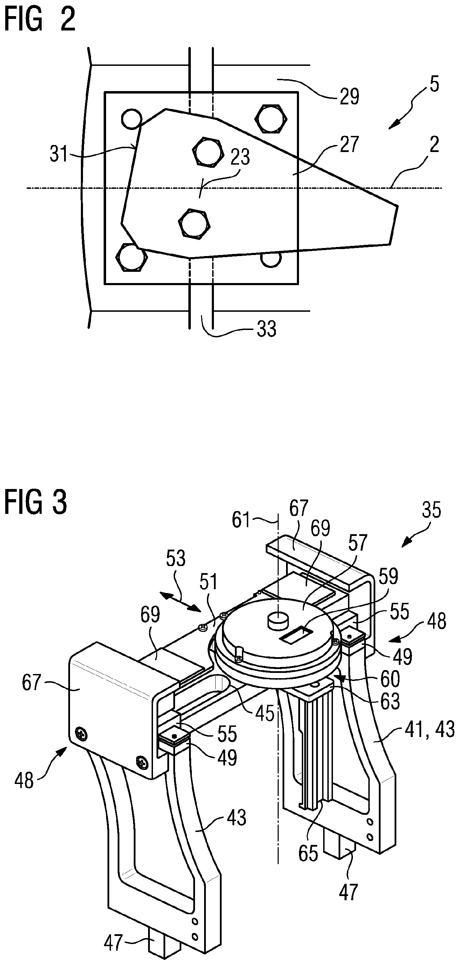

FIG. 2 zeigt die, bezogen auf die Maschinenachse 2, radiale Draufsicht auf einen Verstellhebel 27 für die auch als verstellbare Verdichtereinlassleitschaufel (Inlet Guide Vane) bezeichnete Verdichterschaufel 19. Zwischen dem Verstellhebel 27 und dem Schaufelblatt der Verdichterschaufel 19 ist das Verdichtergehäuse 29 oder der Verdichterleitschaufelträger vorgesehen. Das Schaufelblatt der Verdichterschaufel 19 sowie der Verstellhebel 27 sind starr miteinander verbunden und somit beide um ihre gemeinsame Längsachse 23 stets synchron verdreh- bzw. schwenkbar.

Zur Bestimmung der Winkellage der im Verdichter 5 angeordneten, um ihre Längsachse 23 drehbaren Verdichterleitschaufeln 19 ist am Verstellhebel 27 eine ebene Messfläche 31 vorgesehen, die sich mit der Verdichterleitschaufel 19 und dementsprechend mit dessen Schaufelblatt synchron dreht. Die Messfläche 31 ist außerhalb des Gehäuses 29 bzw. des Verdichterleitschaufelträgers angeordnet. Dadurch ist der Staffelungswinkel der verstellbaren Leitschaufel auch bei geschlossenem Gehäuse 29 von außen ablesbar. Um den Winkel zwischen einer beliebigen Lage der zur Längsachse 23 parallel ausgerichteten Messfläche 31 und ihrer Referenzlage zu bestimmen (Winkellage), ist die in FIG 3 dargestellte Vorrichtung 35 vorgesehen. Die Referenzlage der Messfläche 31 ist dabei diejenige der von der Messfläche 31 einnehmbaren Lagen, in der diese senkrecht zur Maschinenachse 2 steht.

Die Vorrichtung 35 umfasst eine Halteeinrichtung 41 mit zwei seitlich angeordneten Flanken 43, an deren freien Enden zur Befestigung der Vorrichtung 35 am Verdichter 5 mehrere Dauermagnete (nicht dargestellt) vorgesehen sind. Ferner sind an den Flanken 43 zwei Vorsprünge 47 angeschraubt, die in eine am Verdichterleitschaufelträger 29 vorgesehene umlaufende Umfangsnut 33 (FIG 2) einsetzbar sind. Um einen gegenüber dem Verdichter 5 bzw. der vorgegebenen Messposition verdrehten Sitz der Vorrichtung 35 auszuschließen, sind zudem an den Vorsprüngen 47 federgelagerte, geringfügig hervorstehende Kugeln als Druckstücke angebracht, die sich an einer Seitenwand der Umfangsnut 33 (Fig. 2) abstützen können.

Die beiden jeweils nach Art eines Rahmens ausgebildeten Flanken 43 sind über einen Steg 45 starr miteinander verbunden, so dass die Halteeinrichtung 41 insgesamt eine U-förmige Anmutung aufweist. An den Ecken 48 der Halteeinrichtung 41 ist jeweils eine Schiene 49 angeordnet, entlang derer ein Schlitten 51 in die Richtungen des Doppelpfeils 53 verschoben werden kann. Hierzu weist der Schlitten 51 beidendseitig zu dem Profil der Schiene 49 korrespondierende Gleitschuhe 55 auf. Mittig zwischen den beiden aneinander gegenüberliegenden Enden des Schlittens 51 ist eine Winkelmesseinrichtung 57 fest an diesem angeordnet. Die Winkelmesseinrichtung 57 weist eine Anzeige 59 auf, mit der ein Winkel angezeigt werden kann. Die Winkelmesseinrichtung 57 weist an ihrer den Flanken 43 zugewandten Unterseite 60 eine um eine Drehachse 61 schwenkbare Drehplatte 63 zur Erfassung der Winkellage auf. Senkrecht von der Drehplatte 63 und parallel zu deren Drehachse 61 steht ein Messarm 65 frei endend ab.

Die Winkelmesseinrichtung 57 arbeitet prinzipiell derart, dass bei jeder beliebigen Lage der Drehplatte 63 die Anzeige 59 auf "0°" zurück gesetzt werden kann, wonach anschließend durch Verdrehung der Drehplatte 63 um die Drehachse 61 der entsprechende Verdrehwinkel in der Anzeige 59 angezeigt wird.

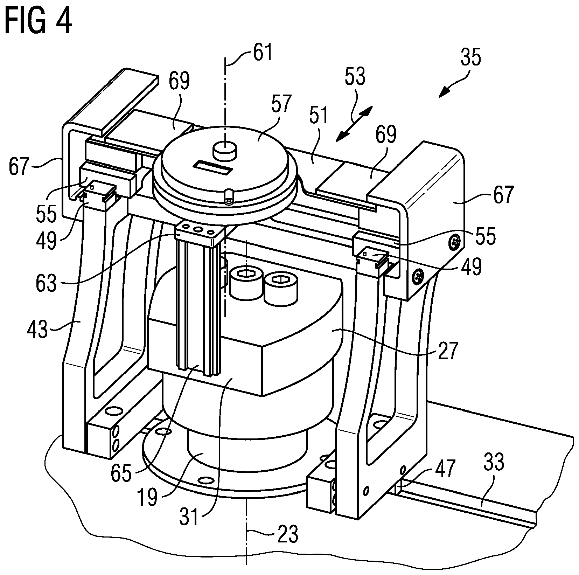

FIG 4 zeigt die am Verdichter 5 befestigte Vorrichtung 35 in ihrer Betriebslage bereit zur Messung der Winkellage der Verdichterleitschaufel 19.

Die Bestimmung der Winkellage der Verdichterleitschaufel 19 bezogen auf die Referenzlage wird anhand der FIG 2 erläutert.

Vor der Messung der Winkellage von Verdichterleitschaufeln eines Leitschaufelkranzes ist die Vorrichtung 35 mit Hilfe einer nicht weiter dargestellten Justiervorrichtung zu justieren. Die Justiervorrichtung umfasst im Wesentlichen einen Sitz zur Aufnahme der Vorrichtung in der vorgegebenen Messposition und ein nicht verstellbares Element, welches die Referenzlage aufweist. Darin eingesetzt wird das freie Ende des Messarms flächig an die Referenzlage angelegt, wonach die Anzeige 59 der Winkelmesseinrichtung 57 auf Null justiert wird.

Für die nachfolgenden Messvorgänge wird dann die Vorrichtung 35 stets einen Winkel von 0° anzeigen, wenn sich die Messfläche 31 des betreffenden Verstellhebels 27 in der Referenzlage befindet. Eine Verdrehung des Verstellhebels 27 im Uhrzeigersinn wird beispielsweise mit einem positiven Winkel gekennzeichnet, wohingegen eine Verdrehung der Verdichterleitschaufel 19 entgegen dem Uhrzeigersinn mit einem negativen Vorzeichen angezeigt wird.

Zur Messung wird zuerst die Vorrichtung 35 von außen am Gehäuse 29 des Verdichters oder des Leitschaufelträgers festgelegt. Hierzu werden die an den Flanken 43 angeordneten Vorsprünge 47 in die Umfangsnut 33 eingesetzt, so dass die Vorrichtung 35 gegenüber der Drehachse 23 der Verdichterleitschaufel 19 fehlerfrei ausgerichtet sich in der Messposition befindet. Die Vorrichtung 35 umfasst ferner zwei an den Ecken 48 befestigte U-Profile, welche als Griffe 67 zum Halten der Vorrichtung 35 für einen Bediener dienen. Dadurch ist dieser in der Lage, seine Daumen auf griffig ausgestaltete Kontaktflächen 69 des Schlittens 51 zu legen und diesen entlang der Schienen 49 zu verschieben. Beim Einsetzen der Vorsprünge 47 in die Umfangsnut 33 hält ein Bediener die Vorrichtung 35 mit Hilfe der Griffe 67 und den Flächen 69 so, dass der Messarm 65 die Messfläche 31 vorerst nicht berührt. Dadurch wird sichergestellt, dass die Vorrichtung 35 unverkantet und somit in der vorgegebenen Messposition gegenüber der betreffenden Verdichterleitschaufel 19 korrekt ausgerichtet ist. Anschließend verschiebt der Bediener den Schlitten 51 derart, dass der Messarm 65 die Messfläche 31 flächig berührt. Sofern dabei die Messfläche 31 gegenüber ihrer Referenzlage verdreht ist, muss ebenso der Messarm 65 samt Drehplatte 63 um den gleichen Betrag geschwenkt werden, bis dessen freies, ebenes Ende dann flächig an der ebenen Messfläche 31 anliegt. Dann zeigt die Messeinrichtung 57 die individuelle Winkellage der betreffenden Verdichterleitschaufel in Bezug auf die Referenzlage an.

Ferner kann die Vorrichtung 35 auch weitere Mittel umfassen, mit denen die von ihr bestimmbaren Winkellagen speicherbar und aus der die abgespeicherten Winkellagen auslesbar sind, damit diese zu statistischen Berechnungen weiterverarbeitet werden können.

Selbstverständlich kann mit der Vorrichtung 35 nicht nur die Winkellage von Verdichtereinlassleitschaufeln erfasst werden, sondern auch die Winkellage von denjenigen Leitschaufeln, die in den vorderen Stufen eines Axialverdichters angeordnet, in analoger Weise wie die Verdichtereinlassleitschaufeln um ihre Längsachse schwenkbar sind. Falls die Gehäuseabschnitte unterschiedlicher Verdichterstufen dann unterschiedliche Platzverhältnisse und somit eventuell andere Referenzelemente aufweisen, kann die Vorrichtung durch die Verwendung von an den Flanken 43 anschraubbaren Adapterelementen daran angepasst werden.

Insgesamt kann mit der Vorrichtung 35 zur Bestimmung der Winkellage einer in einem Verdichter 5 angeordneten, um ihre Längsachse 23 drehbaren Verdichterleitschaufel 19, der eine sich synchron mit ihr drehende, ebene Messfläche 31 zugeordnet ist, eine besonders zuverlässige, einfache sowie fehlerfreie Erfassung der Winkellagen durchgeführt werden. Die Winkellage der sich um ihre Längsachse drehbaren Verdichterleitschaufel 19 lässt sich äußerst präzise und reproduzierbar bestimmen. Die Vorrichtung 35 weist hierzu mindestens eine Halteeinrichtung 41, die zur ausgerichteten temporären Befestigung der Vorrichtung 35 am Gehäuse 29 des Verdichters 5 vorgesehen ist und zumindest eine Messeinheit auf, die eine Winkelmesseinrichtung 57 mit einer um eine Drehachse 61 drehbaren Drehplatte 63 umfasst, an welcher Drehplatte 63 ein senkrecht abstehender, sich parallel zur Drehachse 61 erstreckender Messarm 65 zur flächigen Anlage seines freien ebenen Endes an der Messfläche 31 vorgesehen ist.

## Patentansprüche

1. Vorrichtung (35)
zur Bestimmung der Winkellage einer in einem Verdichter (5) angeordneten, um ihre Längsachse (23) schwenkbaren Verdichterleitschaufel (19), der eine sich synchron mit ihr schwenkende Messfläche (31) zugeordnet ist,
umfassend eine Halteeinrichtung (41) zum temporären Festlegen der Vorrichtung (35) an einem Gehäuse (29) eines Verdichters von außen und
eine an der Halteeinrichtung (41) angeordnete Messeinheit, die eine Winkelmesseinrichtung (57) mit einer um eine Drehachse (61) drehbaren Drehplatte (63) umfasst, an welcher Drehplatte (63) ein senkrecht abstehender Messarm (65) angeordnet ist,
**dadurch gekennzeichnet, dass**
der Messarm (65) sich parallel zur Drehachse (61) erstreckt und zur flächigen Anlage seines freien Endes an der Messfläche (31) vorgesehen ist.

2. Vorrichtung (35) nach Anspruch 1,
bei der die Halteeinrichtung (41) U-förmig mit zwei Flanken (43) und einem die beiden Flanken verbindenden Steg (45) ausgebildet ist.

3. Vorrichtung (35) nach Anspruch 1 oder 2,
bei der die Messeinheit über einen translatorisch verschiebbaren Schlitten (51) an der Halteeinrichtung (41) angeordnet ist.

4. Vorrichtung (35) nach Anspruch 3,
bei der der Schlitten (51) senkrecht zur Drehachse (61) der Drehplatte (63) und/oder senkrecht zu den Flanken (43) parallel zum Steg (45) verschiebbar ist.

5. Vorrichtung (35) nach einem der Ansprüche 3 bis 4,
bei der an den beiden Stegenden oder Flanken (43) Griffe (67) zum gleichzeitigen Festhalten der Vorrichtung (35) mit zwei Händen vorgesehen sind, derart, dass der Schlitten (51) mit zumindest einem Daumen verschiebbar ist.

6. Vorrichtung (35) nach einem der vorangehenden Ansprüche,
bei der die Halteeinrichtung (41) mehrere Magnete und/oder Dauermagnete umfasst.

7. Vorrichtung (35) nach einem der vorangehenden Ansprüche,
die mittels zweier Druckstücke gegenüber einem am Verdichter angeordneten Referenzelement ausgerichtet festlegbar ist.

8. Vorrichtung (35) nach einem der vorangehenden Ansprüche,
die eine Anzeige (59) zur Anzeige der von der Auswerteeinheit bestimmbaren Winkellage aufweist.

9. Vorrichtung (35) nach einem der vorangehenden Ansprüche,
bei der eine Winkellage von 0° erfasst wird, wenn sich die Messfläche in einer Referenzlage befindet.

10. Vorrichtung (35) nach einem der vorangehenden Ansprüche,
in der die bestimmbaren Winkellagen speicherbar und aus der die abgespeicherten Winkellagen auslesbar sind.

## Claims

1. Device (35)
for determining the angle position of a compressor guide blade (19) which is arranged in a compressor (5) and which is pivotable about its longitudinal axis (23) and which is assigned a measurement surface (31) which pivots synchronously with said compressor guide blade, comprising a holding device (41) for temporarily fixing the device (35) to a housing (29) of a compressor from the outside, and
a measurement unit which is arranged on the holding device (41) and which comprises an angle measurement device (57) with a rotary plate (63) which is rotatable about an axis of rotation (61), on which rotary plate (63) is arranged a vertically projecting measurement arm (65),
**characterized in that**
the measurement arm (65) extends parallel to the axis of rotation (61) and is provided so as to abut areally with its free end against the measurement surface (31).

2. Device (35) according to Claim 1,
in which the holding device (41) is of U-shaped form with two flanks (43) and with a web (45) which connects the two flanks.

3. Device (35) according to Claim 1 or 2,
in which the measurement unit is arranged on the holding device (41) via a carriage (51) which is displaceable in a translatory fashion.

4. Device (35) according to Claim 3,
in which the carriage (51) is displaceable perpendicular to the axis of rotation (61) of the rotary plate (63) and/or perpendicular to the flanks (43) and parallel to the web (45).

5. Device (35) according to one of Claims 3 to 4,
in which handles (67) for gripping the device (35) with two hands simultaneously are provided on the two web ends or flanks (43), in such a way that the carriage (51) can be displaced using at least one thumb.

6. Device (35) according to one of the preceding claims,
in which the holding device (41) comprises a plurality of magnets and/or permanent magnets.

7. Device (35) according to one of the preceding claims, which device can be fixed, so as to be aligned with respect to a reference element arranged on the compressor, by means of two thrust pieces.

8. Device (35) according to one of the preceding claims, which device has a display (59) for displaying the angle position that can be determined by the evaluating unit.

9. Device (35) according to one of the preceding claims, in which an angle position of 0° is detected when the measurement surface is in a reference position.

10. Device (35) according to one of the preceding claims, in which the determinable angle positions can be stored, and from which the stored angle positions can be read out.

## Revendications

1. Installation (35)
pour la détermination de la position angulaire d'une aube (19) directrice de compresseur, qui est montée dans un compresseur (5), qui peut pivoter autour de son axe (23) longitudinal et à laquelle est associée une surface (31) de mesure pouvant pivoter en synchronisme avec elle,
comprenant un dispositif (41) de maintien pour fixer temporairement une installation (35) à une carcasse (29) d'un compresseur de l'extérieur et
une unité de mesure, qui est montée sur le dispositif (41) de maintien et qui comprend un dispositif (57) de mesure d'angle ayant une plaque (63) tournante, qui peut tourner autour d'un axe (61) de rotation et sur laquelle est monté un bras (65) de mesure en saillie verticalement,
**caractérisée en ce que**
le bras (65) de mesure s'étend parallèlement à l'axe (61) de rotation et est prévu pour l'application suivant une surface de son extrémité libre à la surface (31) de mesure.

2. Installation (35) suivant la revendication 1,
dans laquelle le dispositif (41) de maintien est en forme de U en ayant deux flancs (43) et une âme (45) reliant les deux flancs.

3. Installation (35) suivant la revendication 1 ou 2,
dans lequel l'unité de mesure est montée sur le dispositif (41) de maintien par un chariot (51) pouvant se déplacer en translation.

4. Installation (35) suivant la revendication 3,
dans laquelle le chariot peut se déplacer perpendiculairement à l'axe (61) de rotation de la plaque (63) tournante et/ou perpendiculairement aux flancs (43), en étant parallèle à l'âme (45).

5. Installation (35) suivant l'une des revendications 3 à 4,
dans laquelle, aux deux extrémités de l'âme ou sur les flancs (43), sont prévus des crampons (67) pour maintenir simultanément l'installation (35) des deux mains, de manière à pouvoir faire coulisser le chariot (51) par au moins un pouce.

6. Installation (35) suivant l'une des revendications précédentes,
dans laquelle le dispositif (41) de maintien comprend plusieurs aimants et/ou aimants permanents.

7. Installation (35) suivant l'une des revendications précédentes,
qui peut être fixée au moyen de deux pièces de poussée en étant dirigée sur un élément de référence monté sur le compresseur.

8. Installation (35) suivant l'une des revendications précédentes,
qui a un affichage (59) pour afficher la position angulaire pouvant être déterminée par l'unité d'exploitation.

9. Installation (35) suivant l'une des revendications précédentes,
dans laquelle une position angulaire de 0° est détectée lorsque la surface de mesure est dans une position de référence.

10. Installation (35) suivant l'une des revendications précédentes,
dans laquelle les positions angulaires pouvant être déterminées peuvent être mémorisées et peuvent être lues à partir des positions angulaires mémorisées.
